# EUROPEAN PATENT APPLICATION

(11) **EP 3 704 952 A1**
(43) Date of publication of application: **09.09.2020**
(21) Application number: 19219016.3
(22) Date of filing: 20.12.2019
(51) Int. Cl.: A23L 21/25, A23L 3/44, A23L 29/238, A23L 33/21

(54) **PROCESS FOR OBTAINING HONEY POWDER ENRICHED WITH DIETARY FIBRE AND HONEY POWDER ENRICHED WITH DIETARY FIBRE**

(30) Priority: 03.03.2019 PT 2019115350
(71) Applicant: Universidade de Trás-os-Montes e Alto Douro, 5001-801 Quinta de Prados (PT)
(72) Inventor: Ferreira Milheiro Nunes, Fernando Hermínio, 5001-801 VILA REAL (PT)
(74) Representative: Ferreira, Maria Silvina

(57) **Abstract**

The present invention has as objective the production of honey powder containing at least 10g per 100g of dietary fibre with a low hydroxymethylfurfural content, since it is obtained by means of gentle drying techniques such as lyophilization or vacuum drying. The product obtained is a natural sweetener rich in dietary fibre.

## Description

### Technical domain

The present application refers to a process for obtaining honey powder enriched with dietary fibre and the powder honey itself.

### Background

Honey is a natural product resulting from the deposition of nectar from flowers or honeydew collected by the bees in honeycombs and matured in the interior of the hive. The composition of the honey is variable depending on the origin of the nectar and the season of the year, consisting mostly of fructose and glucose and much smaller quantities of sucrose and other oligosaccharides. It contains minerals, amino acids and proteins as well as other minor components such as vitamins and phenolic compounds, the latter being dependent on the floral origin. The honey usually also contains between 15 to 20% water, being a product with high viscosity and adhesiveness, presenting a water activity above 0.6, which may increase drastically by crystallization of the glucose, making the product unstable and susceptible to fermentation and microbial growth. This problem is always increased when the honey presents high contents of water and water activity.
On the other hand, honey has a short shelf life since it is also limited by the increase in the hydroxymethylfurfural content, which must not exceed 40 mg/kg. The hydroxymethylfurfural results from the thermal treatment of the honey, but naturally increases with the increase in the storage time.
The high viscosity and adhesiveness of the honey renders its application more limited, particularly in industrial applications where the handling and dosing become difficult, resulting many times in the impossibility of its total utilization, being for this reason overlooked in favour of common sugar.

### Summary

The present application refers to a process for obtaining honey powder enriched with dietary fibre, which comprises the steps of:
- Mixing between 90 to 10 g of honey with 10 to 90 g of fibre;
- Drying the mixture until the water activity does not exceed 0.5, corresponding to a water contents between 0 to 10g/100g of the final product;
- Grinding the product;
- Packing the product in water resistant package.

In one embodiment, the fibre is soluble fibre based on oligosaccharides, polysaccharides or ingredients rich in fibre, or mixtures thereof.

In one embodiment, the oligosaccharides with fibre effect are selected from among manooligosaccharides, fructooligosaccharides, glucooligosaccharides, galacto-gluco-oligosaccharides and xylooligosaccharides.

In another embodiment, the fibre is an ingredient rich in fibre or mixtures thereof.

The fibre enriched food ingredient is selected between carob flour and chicory.

In one embodiment, the drying step is a lyophilisation at a temperature between 10 and 70°C.

In one embodiment, the drying step is a lyophilisation at a temperature not exceeding 40°C.

In still another embodiment, the drying step is drying in a vacuum oven at a temperature between 10 and 70°C.

In one embodiment an anticaking agent, or mixtures of anticaking agents, are added before the drying step.

In still another embodiment, an anticaking agent, or mixtures of anticaking agents, are added after the drying step.

In one embodiment, a maximum 1% of anticaking agent is added.

In still another embodiment, the honey comprises a hydroxymethylfurfural maximum content of 40m/kg of product, and among 10 and 90 g of fibre.

### General description

The product that is the object of this patent is different from the products already known and commercialized due to the fact that the auxiliary drying agent is not a polysaccharide, such as, for example, alginate or arabinogalactans, nor does it contain maltodextrins.

The drying step is gentle, since it does not utilize high temperatures as in the process of spray-drying and conventional ovens, and in this manner, it does not alter its chemical composition, aroma, flavour and hydroxymethylfurfural content, which is a carcinogenic suspect. On the contrary, it uses soluble fibre based on oligosaccharides in contents that may vary from 10g per 100g of product to 90g per 100g of product.

Due to their technological properties, the oligosaccharides used for the drying step allow the use of larger quantities of honey in the production, also resulting in final products that are richer in honey when compared with the previously existing products.

The fibre that is added to the honey may be a soluble fibre based on oligosaccharides or polysaccharides.
The oligosaccharides with fibre effect are in a non-excluding way, manaoligosaccharides, fructooligosaccharides, glucooligosaccharides, galacto-gluco-oligosaccharides and xylooligosaccharides.

Other types of fibres added to the honey are fibre-enriched ingredients selected from carob flour, chicory, among others.

The high fibre content of this product allows its labelling as high in fibre content.

In order to avoid particle agglomeration after the drying, allowed anticaking agents are used in a quantity not exceeding 1%. The anticaking agents used are selected from the list authorized by the European Union, EC Ruling No. 1333/2008 of the European Parliament of December 16, 2008 concerning food additives.

The hydroxymethylfurfural content is at the most 40mg/kg of the product.

The drying is preferably carried out by lyophilisation, however, it may be carried out by vacuum oven drying at a temperature not exceeding 70°C, which are much gentler drying conditions than the traditional process avoiding the increase in the hydroxymethylfurfural content.

This new product presents a great advantage as regards the use of honey in its natural form which is the ease of manipulation since it may be used in the same manner in the same conditions and in the same applications as the common sugar, presenting a longer shelf life than natural honey due to its low value of water activity, presenting a high fibre content.
It shows advantages over the honey-based powder products that already exist since it presents a low hydroxymethylfurfural content presenting a lighter colour and containing a high amount of soluble dietary fibre. According to the composition, 20g/100g of fibre has the same sweetening power as the honey that originated it. According to the composition, it shows a reduction of at least 30% calories as regards the honey that originated it, being for this reason a product that has a reduced sugar content (Light). It does not contain colouring, food preservatives or flavouring. Preserves the flavour and aroma of the honey that originated it.
According to the composition, it has a sweetening power equivalent to that of common sugar.
The product obtained presents good dispersion and solubility in water and in aqueous products.

### Description of embodiments

Some embodiments are now described in a more detailed manner, which do not intend, however, to limit the scope of the present application.

For 100 g of the final product mix between 90 to 10 g of honey with 10 to 90 g of fibre.

In a preferred embodiment, the fibre may be a soluble fibre based on oligosaccharides, or polysaccharides, or any other food product that is rich in fibre, as for example, carob flour, chicory, among others.

The fibre may consist totally of soluble fibre or contain a part of soluble fibre.

Mixtures of oligosaccharides and/or polysaccharides and/or ingredients that are rich in fibre may be used.

Mix well all the components.

Place in a lyophiliser and lyophilise at room temperature or at a temperature between 10 to 70°C, preferably not exceeding 40°C.

Alternatively, the water may be removed in a vacuum oven using the same temperatures described for the lyophilisation.

Dry for enough time until all the water is removed or until the water activity does not exceed 0.5, corresponding to water contents between 0 to 10g/100g of the final product.

Add a maximum 1% of anticaking agent.

Grind the product.

The anticaking agents to be used may be any one, or combinations of anticaking agents authorized by the European Union, EC Ruling No. 1333/2008 of the European Parliament of December 16, 2008 concerning food additives.

The anticaking agent, or the mixtures of anticaking agents, may be added before, or after, the drying of the honey.

Pack the product in water resistant package.

The present description is not, naturally, in any way restricted to the embodiments submitted in this document, and a person that is averagely skilled in the art may foresee many possibilities of alterations to the same without departing from the general idea, such as defined in the claims. The preferred embodiments described above are obviously interchangeable among themselves. The following claims additionally define preferred embodiments.

## Claims

1. Process for obtaining honey powder enriched with dietary fibre, **characterized by** comprising the steps of:
- Mixing between 90 to 10 g of honey with 10 to 90 g of fibre;
- Drying the mixture until the water activity does not exceed 0.5, corresponding to a water contents between 0 to 10g/100g of the final product;
- Grinding the product;
- Packing the product in water resistant package.

2. Process according to the preceding claim, **characterized in that** the fibre may be soluble based on oligosaccharides, polysaccharides or ingredients rich in fibre, or mixtures thereof.

3. Process according to the preceding claim, **characterized in that** the oligosaccharides with fibre effect are selected among manooligosaccharides, fructooligosaccharides, glucooligosaccharides, galacto-gluco-oligosaccharides and xylooligosaccharides.

4. Process according to claim 1 and 2, **characterized in that** the fibre may be an ingredient rich in fibre or mixtures thereof.

5. Process according to the preceding claim, **characterized in that** the fibre enriched food product is selected from between carob flour and chicory.

6. Process, according to any of the preceding claims, **characterized in that** the drying step may be a lyophilisation at a temperature between 10 and 70°C.

7. Process, according to any of the preceding claims, **characterized in that** the drying step may be a lyophilisation at a temperature not exceeding 40°C.

8. Process according to claims 1 to 5, **characterized in that** the drying step may be a drying in vacuum oven at a temperature between 10 to 70°C.

9. Process, according to any of the preceding claims, **characterized in that** an anticaking agent, or mixtures of anticaking agents, are added prior to the drying step.

10. Process, according to any one of claims 1 to 8, **characterized in that** an anticaking agent, or mixtures of anticaking agents, are added after the drying step.

11. Process, according to any of the preceding claims, **characterized in that** a maximum 1% of anticaking agent may be added.

12. Honey powder enriched with dietary fibre, **characterized by** comprising a maximum content of hydroxymethylfurfural of 40 mg/kg of product, and among 10 to 90 g of fibre.
